(19) Europäisches Patentamt
European Patent Office
Office européen des brevets

(11) EP 4 410 403 A1

(12) EUROPEAN PATENT APPLICATION
published in accordance with Art. 153(4) EPC

(43) Date of publication:
**07.08.2024 Bulletin 2024/32**

(21) Application number: **22875675.5**

(22) Date of filing: **25.08.2022**

(51) International Patent Classification (IPC):
***B01D 53/14*** *(2006.01)* ***B01J 20/26*** *(2006.01)*
***B01J 20/28*** *(2006.01)*

(52) Cooperative Patent Classification (CPC):
**B01D 53/14; B01J 20/26; B01J 20/28**

(86) International application number:
**PCT/JP2022/032130**

(87) International publication number:
**WO 2023/053803 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.09.2021 JP 2021158390**

(71) Applicant: **NITTO DENKO CORPORATION**
**Ibaraki-shi**
**Osaka 567-8680 (JP)**

(72) Inventors:
- **MINAMI Yui**
  **Ibaraki-shi, Osaka 567-8680 (JP)**
- **SUZUKI Satoru**
  **Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

# (54) ACIDIC GAS ADSORBENT AND ACIDIC GAS ADSORPTION APPARATUS

(57) The present invention provides an acidic gas adsorbent having improved heat resistance. The acidic gas adsorbent of the present invention includes a polymer P having an amino group and at least one selected from the group consisting of a sulfide bond and a polysulfide bond. The polymer P is, for example, an epoxy polymer including a constitutional unit derived from an amine monomer and a constitutional unit derived from a thiol monomer. An acidic gas adsorption device 20 of the present invention includes an adsorption part 21 having a gas inlet 22 and a gas outlet 23. The adsorption part 21 contains the acidic gas adsorbent.

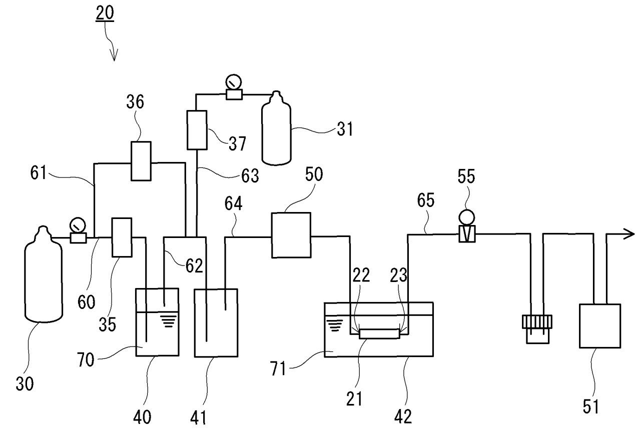


FIG.2



Processed by Luminess, 75001 PARIS (FR)

## Description

TECHNICAL FIELD

The present invention relates to an acidic gas adsorbent and an acidic gas adsorption device.

BACKGROUND ART

In recent years, in order to reduce the amount of carbon dioxide in atmospheric air, carbon capture and storage (CCS) and carbon capture and utilization (CCU) have been considered. In CCS and CCU, in some cases, capture of carbon dioxide is performed by separating carbon dioxide from atmospheric air.

As a method for separating acidic gas such as carbon dioxide from atmospheric air, an adsorption method in which acidic gas is caused to be adsorbed by an adsorbent to be separated has been developed. The adsorbent utilized in the adsorption method can adsorb acidic gas by coming into contact with atmospheric air, for example.

The material of the adsorbent is, for example, an amine compound having a function of adsorbing acidic gas. As an example, Patent Literature 1 discloses an adsorbent including an amine compound, a hydroxyl group-containing additive, and a porous carrier.

CITATION LIST

Patent Literature

Patent Literature 1: JP 2018-519146A

SUMMARY OF INVENTION

Technical Problem

According to a study by the present inventors, an amine compound included in an acidic gas adsorbent tends to be oxidized by oxygen, etc., in air in a high temperature environment, resulting in a decrease in adsorption performance for acidic gas. A conventional acidic gas adsorbent has a high rate of decrease in adsorption performance due to oxidation in a high temperature environment, and there is room for improvement of the conventional acidic gas adsorbent in terms of heat resistance.

The present invention provides an acidic gas adsorbent having improved heat resistance.

Solution to Problem

The present invention provides an acidic gas adsorbent including a polymer having an amino group and at least one selected from the group consisting of a sulfide bond and a polysulfide bond.

Further, the present invention provides an acidic gas adsorption device including an adsorption part having a gas inlet and a gas outlet, wherein the adsorption part contains the above acidic gas adsorbent.

Advantageous Effects of Invention

According to the present invention, an acidic gas adsorbent having improved heat resistance can be provided.

BRIEF DESCRIPTION OF THE DRAWINGS

FIG. 1 is a diagram for describing a method for identifying the thickness of a cover layer of an acidic gas adsorbent according to an embodiment of the present invention.

FIG. 2 is a diagram for describing a method for measuring an adsorption amount of carbon dioxide by the acidic gas adsorbent.

FIG. 3 is a graph showing an example of the relationship between a time of heat treatment and a maintenance rate of an amount of carbon dioxide that can be adsorbed, for the acidic gas adsorbent.

FIG. 4 is a graph showing an example of the relationship between a time of heat treatment and an amount of carbon dioxide that can be adsorbed, for the acidic gas adsorbent.

FIG. 5 is a graph showing an example of infrared absorption spectra of the acidic gas adsorbent before and after heat treatment.

DESCRIPTION OF EMBODIMENTS

An acidic gas adsorbent according to a first aspect of the present invention includes a polymer having an amino group and at least one selected from the group consisting of a sulfide bond and a polysulfide bond.
In a second aspect of the present invention, for example, in the acidic gas adsorbent according to the first aspect, the amino group includes a secondary amino group.
In a third aspect of the present invention, for example, in the acidic gas adsorbent according to the first or second aspect, the polymer is an epoxy polymer including a constitutional unit derived from an amine monomer and a constitutional unit derived from a thiol monomer.
In a fourth aspect of the present invention, for example, in the acidic gas adsorbent according to the third aspect, a number of thiol groups included in the thiol monomer is 3 or more.
In a fifth aspect of the present invention, for example, in the acidic gas adsorbent according to the third or fourth aspect, the number of thiol groups included in the thiol monomer is 4.
In a sixth aspect of the present invention, for example, in the acidic gas adsorbent according to any one of the third to fifth aspects, the thiol monomer includes an ester group.
In a seventh aspect of the present invention, for example, in the acidic gas adsorbent according to any one of the third to sixth aspects, a content of the constitutional unit derived from the thiol monomer in the polymer is 5 wt% to 30 wt%.
In an eighth aspect of the present invention, for example, in the acidic gas adsorbent according to any one of the third to seventh aspects, the amine monomer is an aliphatic amine.
In a ninth aspect of the present invention, for example, with respect to the acidic gas adsorbent according to any one of the first to eighth aspects, when heat treatment is performed at 85°C for 100 hours, a maintenance rate of an amount (mmol/g) of carbon dioxide that can be adsorbed is 35% or more.
In a tenth aspect of the present invention, for example, with respect to the acidic gas adsorbent according to any one of the first to ninth aspects, a time until a maintenance rate of an amount (mmol/g) of carbon dioxide that can be adsorbed when heat treatment is performed at 85°C reaches 50% is 75 hours or more.
In an eleventh aspect of the present invention, for example, with respect to the acidic gas adsorbent according to any one of the first to tenth aspects, an adsorption amount of carbon dioxide when the acidic gas adsorbent is caused to be in contact with mixed gas composed of carbon dioxide, nitrogen, and water vapor for 15 hours is 0.1 mmol/g or more, where the carbon dioxide in the mixed gas has a concentration of 400 vol ppm and the mixed gas has a temperature of 23°C and a humidity of 80%RH.
An acidic gas adsorption device according to a twelfth aspect includes

an adsorption part having a gas inlet and a gas outlet, wherein
the adsorption part contains the acidic gas adsorbent according to any one of the first to eleventh aspects.

Hereinafter, details of the present invention will be described, but the following description is not intended to limit the present invention to specific embodiments.
An acidic gas adsorbent of the present embodiment includes a polymer P having an amino group and at least one selected from the group consisting of a sulfide bond and a polysulfide bond. The polymer P has a function of adsorbing acidic gas due to the amino group. The polymer P includes, as the amino group, at least one selected from the group consisting of a primary amino group, a secondary amino group, and a tertiary amino group, for example. From the viewpoint of the acidic gas adsorption ability, the polymer P preferably includes at least one selected from the group consisting of a primary amino group and a secondary amino group, and particularly preferably includes a secondary amino group. In other words, the amino group of the polymer P preferably includes a secondary amino group. The polymer P having a secondary amino group also has a tendency of easily desorbing the adsorbed acidic gas. That is, in the case of the polymer P having a secondary amino group, a regeneration process of the acidic gas adsorbent can be performed under a relatively mild condition. The polymer P may include a tertiary amino group, but preferably includes no tertiary amino group.
The content of the amino group in the polymer P, in particular, the primary amino group or the secondary amino group, is, for example, 10 wt% or more and preferably 30 wt% or more. The higher this content is, the more the acidic gas adsorption ability of the acidic gas adsorbent tends to be improved. The upper limit value of the content of the amino group in the polymer P is not limited in particular, and is 80 wt%, for example.
A sulfide bond means a bond between a divalent sulfur atom and two carbon atoms and is represented by C-S-C. The sulfide bond forms a sulfide group (thioether group). A polysulfide bond means a bond between two or more

linearly linked divalent sulfur atoms and two carbon atoms and is represented by C-$(S)_n$-C (n is an integer of 2 or more). A specific example of the polysulfide bond is a disulfide bond (C-S-S-C). The polysulfide bond forms a polysulfide group. Out of the sulfide bond and the polysulfide bond, the acidic gas adsorbent preferably has the sulfide bond. In the following, a sulfide bond and a polysulfide bond are sometimes collectively referred to simply as "sulfide bond". Similarly, a sulfide group and a polysulfide group are sometimes collectively referred to simply as "sulfide group".

The polymer P has a sulfide group formed by a sulfide bond in addition to the amino group. From the viewpoint of improving the heat resistance of the acidic gas adsorbent, the content of the sulfide group in the polymer P is, for example, 0.1 wt% or more, and may be 1 wt% or more or may be 5 wt% or more. The upper limit value of the content of the sulfide group is not limited in particular, is, for example, 30 wt%, and may be 20 wt% or may be 10 wt%.

The polymer P may include another functional group other than the amino group and the sulfide group. Examples of the other functional group include a hydroxyl group, an ether group, an ester group, an amide group, a sulfinyl group, a sulfonyl group, a thiol group, and the like.

The polymer P is not limited in particular as long as the polymer P has an amino group and a sulfide bond. For example, the polymer P is an epoxy polymer including a constitutional unit U1 derived from an amine monomer and a constitutional unit U2 derived from a thiol monomer. The epoxy polymer is, for example, at least one selected from the group consisting of a polymer P1 of a monomer group including an amine monomer, a thiol monomer, and an epoxy monomer, and a reaction product P2 of a compound group including an amine monomer, a thiol monomer, and an epoxy prepolymer, and is preferably the polymer P1. A specific example of the reaction product P2 is a product (crosslinked product) in which an epoxy prepolymer is crosslinked by an amine monomer and a thiol monomer.

The monomer group for forming the polymer P1 includes an amine monomer, a thiol monomer, and an epoxy monomer as described above, and is preferably composed of only these monomers. That is, the polymer P1 is preferably a polymer of an amine monomer, a thiol monomer, and an epoxy monomer.

The amine monomer is a monomer including at least one amino group, and, for example, includes at least one primary amino group. The number of the primary amino groups included in the amine monomer is preferably two or more, and may be three or more, or may be four or more. The upper limit value of the number of the primary amino groups is not limited in particular, and is ten, for example. The amine monomer may include a secondary amino group and a tertiary amino group, in addition to the primary amino group, but preferably includes no tertiary amino group. The molecular weight of the amine monomer is not limited in particular, and is, for example, less than 1000 and preferably 500 or less.

Examples of the amine monomer include: aliphatic amines such as ethylamine, ethylenediamine, 1,4-butylenediamine, 1,5-pentanediamine, 1,6-hexanediamine, 1,7-heptanediamine, 1,8-octanediamine, diethylenetriamine, triethylenetetramine, tetraethylenepentamine, imino-bis-propylamine, bis(hexamethylene)triamine, 1,3,6-trisaminomethylhexane, tris(2-aminoethyl)amine, N,N'-bis(3-aminopropyl)ethylenediamine, polymethylenediamine, trimethylhexamethylenediamine, and polyetherdiamine; alicyclic amines such as isophoronediamine, menthanediamine, piperazine, N-aminoethylpiperazine, 3,9-bis(3-aminopropyl)-2,4,8,10-tetraoxaspiro(5,5)undecane adduct, bis(4-amino-3-methylcyclohexyl)methane, and bis(4-aminocyclohexyl)methane, and modified products of these; and the like. Depending on the case, the amine monomer may be an aliphatic polyamideamine including a polyamine and a dimer acid. The amine monomer is preferably an aliphatic amine, in particular, triethylenetetramine (TETA). The amine monomer can be used alone, or two types or more thereof may be used in combination.

The thiol monomer is a monomer including at least one thiol group. Examples of the thiol group included in the thiol monomer include a primary thiol group, a secondary thiol group, and a tertiary thiol group. The thiol monomer preferably includes a primary thiol group or a secondary thiol group. The number of the thiol groups included in the thiol monomer is preferably 2 or more, more preferably 3 or more, and further preferably 4 or more. The upper limit value of the number of the thiol groups is not limited in particular, and is 10, for example. From the viewpoint of improving the acidic gas adsorption ability of the acidic gas adsorbent, the number of the thiol groups is particularly preferably 4. The thiol monomer may further include another functional group other than the thiol group, for example, an ester group. The molecular weight of the thiol monomer is not limited in particular, and is, for example, less than 1000 and preferably 500 or less.

Examples of the thiol monomer include: ester group-containing thiol compounds such as trimethylolpropane tristhiopropionate (also known as trimethylolpropane tris(3-mercaptopropionate)), pentaerythritol tetrakisthiopropionate, dipentaerythritol hexa-3-mercaptopropionate, trimethylolpropane tris(3-mercaptobutyrate), pentaerythritol tetrakis(3-mercaptobutyrate), ethylene glycol bis-thioglycolate, trimethylolpropane tris-thioglycolate, pentaerythritol tetrakis-thioglycolate, 1,4-butanediol bis-thioglycolate, and 1,4-bis(3-mercaptobutyryloxy)butane; aliphatic thiols such as di(2-mercaptoethyl)ether, 1,4-butanedithiol, 1,5-dimercapto-3-thiapentane, and 1,8-dimercapto-3,6-dioxaoctane; aromatic thiols such as 1,3,5-trimercaptomethylbenzene, 4,4'-thiodibenzenethiol, 1,3,5-trimercaptomethyl-2,4,6-trimethylbenzene, 2,4,6-trimercapto-s-triazine, and 2-dibutylamino-4,6-dimercapto-s-triazine; and the like. The thiol monomer is preferably an ester group-containing thiol compound such as pentaerythritol tetrakisthiopropionate, trimethylolpropane tris(3-mercaptobutyrate), pentaerythritol tetrakis(3-mercaptobutyrate), and 1,4-bis(3-mercaptobutyryloxy)butane, and particularly

preferably an ester group-containing tetrafunctional thiol compound such as pentaerythritol tetrakisthiopropionate and pentaerythritol tetrakis(3-mercaptobutyrate). The thiol monomer can be used alone, or two types or more thereof may be used in combination.

As the thiol monomer, those commercially available as curing aids for epoxy monomers and epoxy prepolymers can be used. Examples of commercially available products of the thiol monomer include: JER MATE QX11 and QX12, jERCURE QX30, QX40, QX60, and QX900, and CAPCURE CP3-800 manufactured by Mitsubishi Chemical Corporation; OTG, EGTG, TMTG, PETG, 3-MPA, TMTP, and PETP manufactured by YODO KAGAKU CO., LTD.; TEMPIC, TMMP, PEMP, PEMP-II-20P, and DPMP manufactured by SAKAI CHEMICAL INDUSTRY CO., LTD.; Karens MT PE1, BD1, NR1, TPMB, and TEMB, etc., manufactured by Showa Denko K.K.; and the like.

The epoxy monomer is a monomer including at least one epoxy group. The number of the epoxy groups included in the epoxy monomer is preferably two or more, and may be three or more, or may be four or more. The upper limit value of the number of the epoxy groups included in the epoxy monomer is not limited in particular, and is ten, for example. The molecular weight of the epoxy monomer is not limited in particular, and is, for example, less than 1000 and preferably 500 or less.

Examples of the epoxy monomer include: monofunctional epoxy compounds such as n-butyl glycidyl ether, higher alcohol glycidyl ether, allyl glycidyl ether, 2-ethylhexyl glycidyl ether, phenyl glycidyl ether, cresyl glycidyl ether, p-sec-butylphenyl glycidyl ether, and t-butylphenyl glycidyl ether; diepoxy alkanes such as 1,5-hexadiene diepoxide, 1,7-octadiene diepoxide, and 1,9-decadiene diepoxide; ether group-containing polyfunctional epoxy compounds such as (poly)ethylene glycol diglycidyl ether, (poly)propylene glycol diglycidyl ether, 1,4-butanediol diglycidyl ether, neopentyl glycol diglycidyl ether, 1,6-hexanediol diglycidyl ether, and trimethylolpropane polyglycidyl ether; and amino group-containing polyfunctional epoxy compounds such as N,N,N',N'-tetraglycidyl-m-xylenediamine and 1,3-bis(N,N-diglycidylaminomethyl)cyclohexane. The epoxy monomer is preferably an ether group-containing polyfunctional epoxy compound such as 1,4-butanediol diglycidyl ether and 1,6-hexanediol diglycidyl ether. The epoxy monomer can be used alone, or two types or more thereof may be used in combination. When a monofunctional epoxy compound is used, the monofunctional epoxy compound is preferably used in combination with another epoxy monomer including two or more epoxy groups. The monofunctional epoxy compound can also be utilized as a reactive diluent for adjusting the viscosity of the monomer group for forming the polymer P1.

Examples of the amine monomer and the thiol monomer for forming the reaction product P2 include those described above with respect to the polymer P1.

The epoxy prepolymer includes at least one epoxy group, for example. The number of the epoxy groups included in the epoxy prepolymer is preferably two or more, and may be three or more, or may be four or more. The upper limit value of the number of the epoxy groups included in the epoxy prepolymer is not limited in particular, and is 100, for example. The weight average molecular weight of the epoxy prepolymer is not limited in particular, and is 1000 to 50000, for example.

Examples of the epoxy prepolymer include an aromatic epoxy resin and a non-aromatic epoxy resin. Examples of the aromatic epoxy resin include a polyphenyl-based epoxy resin, an epoxy resin including a fluorene ring, an epoxy resin including triglycidyl isocyanurate, an epoxy resin including a hetero aromatic ring (e.g., triazine ring), and the like. Examples of the polyphenyl-based epoxy resin include bisphenol A type epoxy resin, brominated bisphenol A type epoxy resin, bisphenol F type epoxy resin, bisphenol AD type epoxy resin, stilbene type epoxy resin, biphenyl type epoxy resin, bisphenol A novolak type epoxy resin, cresol novolak type epoxy resin, diaminodiphenylmethane type epoxy resin, tetrakis(hydroxyphenyl)ethane-based epoxy resin, and the like. Examples of the non-aromatic epoxy resin include aliphatic glycidyl ether type epoxy resin, aliphatic glycidyl ester type epoxy resin, alicyclic glycidyl ether type epoxy resin, alicyclic glycidyl amine type epoxy resin, alicyclic glycidyl ester type epoxy resin, and the like. The epoxy prepolymer can be used alone, or two types or more thereof can be used in combination.

As described above, the polymer P as an epoxy polymer includes the constitutional unit U1 derived from an amine monomer and the constitutional unit U2 derived from a thiol monomer. When the polymer P is the polymer P1, the polymer P further includes a constitutional unit U3 derived from an epoxy monomer. The content of the constitutional unit U1 in the polymer P, in particular, the polymer P1, is, for example, 30 wt% or more and preferably 50 wt% or more. The upper limit value of the content of the constitutional unit U1 is not limited in particular, and is 80 wt%, for example. The content of the constitutional unit U2 in the polymer P, in particular, the polymer P1, is, for example, 1 wt% or more, preferably 5 wt% or more, and more preferably 10 wt% or more. The upper limit value of the content of the constitutional unit U2 is not limited in particular, is, for example, 30 wt%, and may be 20 wt%. The content of the constitutional unit U2 is preferably 5 wt% to 30 wt%. The content of the constitutional unit U3 in the polymer P, in particular, the polymer P1, is 15 wt% to 65 wt%, for example.

When the polymer P is to be prepared, the blending ratio between the amine monomer, the thiol monomer, and the epoxy monomer or the epoxy prepolymer is preferably set such that the ratio of the equivalent of the epoxy group included in the epoxy monomer or the epoxy prepolymer relative to the sum of the equivalent of active hydrogen of the primary amino group included in the amine monomer and the equivalent of the thiol group included in the thiol

monomer is, for example, 1 or less, preferably 0.9 or less, and more preferably 0.5 or less.

A glass transition temperature Tg of the polymer P is not limited in particular, is, for example, 40°C or less, preferably 30°C or less, more preferably 20°C or less, and further preferably 15°C or less, and may be 10°C or less, may be 5°C or less, or may be 0°C or less. When the glass transition temperature Tg of the polymer P is low to this extent, a regeneration process of the acidic gas adsorbent can be performed under a relatively mild condition, for example, with heat treatment at a low temperature. From the viewpoint of sufficiently ensuring the acidic gas adsorption ability of the acidic gas adsorbent and from the viewpoint of heat resistance, the lower limit value of the glass transition temperature Tg of the polymer P is, for example, -100°C, preferably -50°C, and more preferably -10°C. In the present description, the glass transition temperature Tg means the midpoint glass transition temperature ($T_{mg}$) obtained according to the standards of JIS K7121:1987. Normally, the polymer P corresponds to a thermosetting resin.

The weight average molecular weight of the polymer P is not limited in particular, and is, for example, 500 or more, preferably 1000 or more, more preferably 10000 or more, and further preferably 100000 or more. The upper limit value of the weight average molecular weight of the polymer P is, for example, 10000000.

The content of the polymer P in the acidic gas adsorbent is, for example, 10 wt% or more, preferably 30 wt% or more, and more preferably 50 wt% or more, and may be 70 wt% or more, may be 90 wt% or more, or may be 95 wt% or more. The acidic gas adsorbent may be substantially composed of only the polymer P. The higher the content of the polymer P is, the more the acidic gas adsorption ability of the acidic gas adsorbent tends to be improved.

The acidic gas adsorbent may be substantially composed of only the polymer P, but may further include another component other than the polymer P. Examples of the other component include a reaction accelerator utilized when the polymer P is synthesized, and the like. Examples of the reaction accelerator include: tertiary amines such as triethylamine and tributylamine; and imidazoles such as 2-phenol-4-methylimidazole, 2-ethyl-4-methylimidazole, and 2-phenol-4,5-dihydroxyimidazole. These reaction accelerators can accelerate reaction for synthesizing the polymer P1, for example. The acidic gas adsorbent may include an antioxidant such as a low molecular weight compound having a sulfide bond, as another component, but preferably includes no antioxidant.

A density d of nitrogen element in the acidic gas adsorbent is not limited in particular, and is, for example, 1 mmol/g or more, preferably 3 mmol/g or more, more preferably 5 mmol/g or more, and further preferably 7 mmol/g or more. The upper limit value of the density d of nitrogen element is not limited in particular, and is 20 mmol/g, for example. When all nitrogen element included in the acidic gas adsorbent is derived from the amino group, the density d of nitrogen element can be regarded as the density of the amino group in the acidic gas adsorbent.

The density d of nitrogen element can be measured according to the following method. First, a weight ratio w (wt%) of nitrogen element included in the acidic gas adsorbent is measured by using a commercially-available CHN elemental analyzer. On the basis of the obtained result, the density d of nitrogen element can be calculated from formula below.

$$\text{Density d (mmol/g)} = (\text{weight ratio w (wt\%)} \times 1000) / (\text{atomic weight of nitrogen} \times 100)$$

The content of the amino group, in particular, the secondary amino group, in the acidic gas adsorbent is, for example, 1 wt% or more and preferably 3 wt% or more, and may be 10 wt% or more, or may be 30 wt% or more. The higher this content is, the more the acidic gas adsorption ability of the acidic gas adsorbent tends to be improved. The upper limit value of the content of the amino group in the acidic gas adsorbent is not limited in particular, is, for example, 80%, and may be 10 wt% depending on the case.

The shape of the acidic gas adsorbent is not limited in particular, and is, for example, a block shape, a particulate shape, or the like. In the present description, the particulate shape includes a spherical shape, an ellipsoid shape, a flake shape, a fiber shape, and the like.

The acidic gas adsorbent may have a porous structure. As an example, the acidic gas adsorbent may include a porous body S1 including the polymer P, or may include a porous body S2 composed of a material other than the polymer P. The porous body S1 is typically composed of only the polymer P. In the acidic gas adsorbent including the porous body S2, the polymer P is supported on the surfaces of pores of the porous body S2, for example. In the present description, the porous bodies S1 and S2 are sometimes referred to simply as porous body S. The surfaces of the pores of the porous body S mean the surfaces respectively facing the pores inside the porous body S. In the present description, to be distinguished from the surfaces of the pores, the surface that defines the external form of the porous body S may be referred to as the external surface of the porous body S.

The shape of the porous body S is, for example, a block shape, a particulate shape, or the like. In the porous body S, the shape of the pore is not limited in particular. The porous body S may have a continuous hole continuously formed in a three-dimensional manner, or may have independent holes. The porous body S may have a through hole penetrating the porous body S.

The average particle diameter of the particulate porous body S is not limited in particular, is, for example, 0.5

μm or more and preferably 1 μm or more, and may be 10 μm or more, may be 20 μm or more, or may be 30 μm or more. The average particle diameter of the porous body S may be 200 μm or less, may be 100 μm or less, or may be less than 75 μm. In the present description, the average particle diameter of the porous body S means a particle diameter (d50) corresponding to 50% of volume accumulation in a particle size distribution measured by a laser diffraction-type particle size meter or the like.

A pore volume V1 of the porous body S is not limited in particular, is, for example, 0.5 $cm^3/g$ or more, and may be 1.0 $cm^3/g$ or more, or may be 2.0 $cm^3/g$ or more. In the porous body S2 having a large pore volume V1, a sufficient amount of the polymer P can be supported on the surfaces of the pores. The upper limit value of the pore volume V1 of the porous body S is not limited in particular, is, for example, 5.0 $cm^3/g$, and may be 4.0 $cm^3/g$, or may be 3.0 $cm^3/g$. The pore volume V1 of the porous body S can be identified by the following method. First, with respect to the porous body S, a gas adsorption method using nitrogen gas is performed. Data of an adsorption isotherm obtained by the gas adsorption method is converted by the BJH (Barrett-Joyner-Halenda) method. The pore volume V1 of the porous body S can be identified on the basis of the obtained pore diameter distribution.

An average pore diameter D of the porous body S is not limited in particular, is, for example, 5 nm or more, preferably 10 nm or more, and more preferably 20 nm or more, and may be 30 nm or more. The upper limit value of the average pore diameter D of the porous body S is not limited in particular, and is 50 nm, for example. Preferably, the average pore diameter D of the porous body S is 5 to 50 nm. The average pore diameter D of the porous body S means the average value of diameters of a plurality of pores calculated from a pore diameter distribution. The pore diameter distribution can be obtained by the method described above with respect to the pore volume V1 of the porous body S.

The specific surface area of the porous body S is not limited in particular, is, for example, 50 $m^2/g$ or more and preferably 100 $m^2/g$ or more, and may be 200 $m^2/g$ or more, or may be 250 $m^2/g$ or more. The upper limit value of the specific surface area of the porous body S is not limited in particular, is, for example, 800 $m^2/g$, and may be 500 $m^2/g$. Preferably, the specific surface area of the porous body S is 50 to 800 $m^2/g$. The specific surface area of the porous body S means the BET (Brunauer-Emmett-Teller) specific surface area in terms of nitrogen gas adsorption.

Measurement of a pore volume V1, an average pore diameter D, and the specific surface area of the porous body S2 is performed on the porous body S2 before the polymer P is supported on the surfaces of the pores, for example. However, this measurement may be performed on the porous body S2 obtained by removing the polymer P from the acidic gas adsorbent. The removal of the polymer P can be performed by subjecting the acidic gas adsorbent to heat treatment at a temperature of 800°C or more, for example.

The acidic gas adsorbent may include the porous body S2 and a cover layer covering the surfaces of the pores of the porous body S2, and this cover layer may include the polymer P. The cover layer may entirely cover the surfaces of the pores, or may partially cover the surfaces of the pores. The cover layer may cover not only the surfaces of the pores but also the external surface of the porous body S2. The cover layer may include the polymer P as a main component, or may be substantially composed of only the polymer P.

As an example, when each pore of the porous body S2 is assumed to have a spherical shape, a thickness T of the cover layer calculated from the average pore diameter D of the porous body S2, the pore volume V1 of the porous body S2, and a pore volume V2 of the acidic gas adsorbent is, for example, 10 nm or less, preferably 8.0 nm or less, more preferably 7.0 nm or less, further preferably 6.0 nm or less, particularly preferably 5.0 nm or less, and especially preferably 4.5 nm or less. The smaller the thickness T of the cover layer is, the more the adsorption speed of acidic gas by the acidic gas adsorbent tends to be improved. The lower limit value of the thickness T of the cover layer is not limited in particular, and is 1.0 nm, for example.

The thickness T of the cover layer can be identified by the following method. First, as shown in FIG. 1, it is assumed that, in an acidic gas adsorbent 10, pores 3 of a porous body 1 each have a spherical shape. FIG. 1 is an image figure of a cross section of the acidic gas adsorbent 10, showing a pore 3 having a spherical shape. As shown in FIG. 1, in a method for identifying the thickness T, it is assumed that, in the acidic gas adsorbent 10, a cover layer 2 entirely covers the surface of each pore 3 of the porous body 1. Inside the pore 3 of the porous body 1, a void 4 having a spherical shape and surrounded by the cover layer 2 is formed.

Next, an average pore diameter D (nm) of the porous body 1 is measured, and the obtained value is regarded as a diameter L1 (nm) of the pore 3 of the porous body 1. A volume v1 ($nm^3$) of the pore 3 having a spherical shape can be calculated on the basis of the diameter L1 of the pore 3.

Next, a pore volume V1 ($cm^3/g$) of the porous body 1 and a pore volume V2 ($cm^3/g$) of the acidic gas adsorbent 10 are measured. The pore volume V2 of the acidic gas adsorbent 10 can be measured by the same method as the method described above with respect to the pore volume V1. The value obtained by subtracting the pore volume V2 from the pore volume V1 is regarded as the filling amount ($cm^3/g$) of the cover layer 2 in the acidic gas adsorbent 10. Next, the ratio of the filling amount of the cover layer 2 relative to the pore volume V1 is calculated, and the obtained value is regarded as the filling rate (%) of the cover layer 2 in the acidic gas adsorbent 10. The value obtained by subtracting the filling rate of the cover layer 2 from 100 is regarded as a void rate p (%) of the acidic gas adsorbent 10.

Next, on the basis of the void rate p of the acidic gas adsorbent 10 and the volume v1 of the pore 3, a volume

v2 ($nm^3$) of the void 4 is calculated from formula (1) below.

$$\text{Volume } v2\ (nm^3) = \text{void rate } p\ (\%) \times \text{volume } v1\ (nm^3)/100 \quad (1)$$

Next, from the volume v2 of the void 4, a diameter L2 (nm) of the void 4 is calculated. On the basis of the diameter L1 of the pore 3 and the diameter L2 of the void 4, a thickness T (nm) of the cover layer 2 can be calculated from formula (2) below.

$$\text{Thickness } T\ (nm) = (\text{diameter } L1\ (nm) - \text{diameter } L2\ (nm))/2 \quad (2)$$

The ratio of the filling amount ($cm^3/g$) of the polymer P (cover layer) relative to the pore volume V1 ($cm^3/g$) of the porous body S2 (filling rate of the polymer P in the acidic gas adsorbent) is not limited in particular, is, for example, 90% or less, and may be 80% or less, may be 70% or less, or may be 60% or less. The lower limit value of the filling rate of the polymer P is not limited in particular, and is 10%, for example. The filling amount ($cm^3/g$) of the polymer P corresponds to the value obtained by subtracting the pore volume V2 ($cm^3/g$) of the acidic gas adsorbent from the pore volume V1 ($cm^3/g$) of the porous body S2.

As described above, the porous body S2 is composed of a material other than the polymer P. The porous body S2 may include an inorganic material, may include an organic material, or may include both of an organic material and an inorganic material. Examples of the inorganic material included in the porous body S2 include: metal oxides such as silica, alumina, silica alumina, magnesia, and zirconia; metals; minerals such as a viscosity mineral and a natural mineral; zeolites; and carbon materials such as activated carbon. The porous body S2 preferably includes silica, and particularly preferably is porous silica. Examples of the organic material included in the porous body S2 include (meth)acrylate-based polymers such as polymethyl methacrylate. In the present description, "(meth)acrylate" means acrylate and/or methacrylate.

(Method for producing acidic gas adsorbent)

A method for producing the acidic gas adsorbent of the present embodiment includes, for example, causing a compound group including an amine monomer and a thiol monomer to react to form the polymer P. The compound group is typically a monomer group including an amine monomer, a thiol monomer, and an epoxy monomer. However, the compound group may include an epoxy prepolymer instead of or together with the epoxy monomer.

The reaction of the compound group is typically a polymerization reaction of the amine monomer, the thiol monomer, and the epoxy monomer. However, the reaction of the compound group may be a crosslinking reaction of the epoxy prepolymer by the amine monomer and the thiol monomer. In the reaction of the compound group, the amino group of the amine monomer reacts with the epoxy group of the epoxy monomer or the epoxy prepolymer. Similarly, the thiol group of the thiol monomer reacts with the epoxy group of the epoxy monomer or the epoxy prepolymer to form a sulfide bond. The reaction of the compound group can be carried out by applying energy to the compound group. The energy that is applied to the compound group is preferably thermal energy. As an example, the reaction of the compound group can be caused to proceed by heating the compound group at a temperature of 40°C to 100°C. However, the energy that is applied to the compound group may be light energy.

The acidic gas adsorbent including the porous body S1 including the polymer P can be produced, for example, by the following method. First, the above compound group is mixed with a porogen to prepare a mixed solution. The porogen is, for example, a solvent that can dissolve the monomers and the prepolymer included in the compound group and further can cause reaction-induced phase separation after the compound group reacts. Specific examples of the porogen include: cellosolves such as methyl cellosolve and ethyl cellosolve; esters such as ethylene glycol monomethyl ether acetate and propylene glycol monomethyl ether acetate; glycols such as polyethylene glycol and polypropylene glycol; and ethers such as polyoxyethylene monomethyl ether and polyoxyethylene dimethyl ether. The porogen may be a polar solvent such as ethyl acetate, N,N-dimethylformamide (DMF), acetonitrile, ethanol, and isopropanol, a nonpolar solvent such as toluene, or a mixed solvent of these solvents. The porogen can be used alone, or two types or more thereof may be used in combination.

Another component other than the compound group may be further added to the mixed solution. Examples of the other component include the reaction accelerators described above, and the like.

Next, the compound group is caused to react in the mixed solution. As an example, the compound group is caused to react by filling a mold with the mixed solution and performing heat treatment. Accordingly, a cured body including the polymer P and the porogen is obtained. In the cured body, a co-continuous structure is formed by phase separation of the polymer P and the porogen.

Next, the porogen is extracted and removed from the cured body. Accordingly, an acidic gas adsorbent including the porous body S1 can be obtained. Extraction of the porogen can be performed, for example, by immersing the cured body in a solvent. As this solvent, water, aliphatic hydrocarbon solvents, aromatic hydrocarbon solvents, aliphatic alcohol solvents, ether solvents, halogen-containing organic solvents, and the like can be used. Examples of aliphatic hydrocarbon solvents include n-hexane, cyclohexane, methylcyclohexane, n-heptane, n-octane, isooctane, petroleum ether, benzine, and the like. Examples of aromatic hydrocarbon solvents include toluene, xylene, mesitylene, benzene, and the like. Examples of aliphatic alcohol solvents include methanol, ethanol, isopropanol, butanol, cyclohexanol, ethylene glycol, propylene glycol, propylene glycol monomethyl ether, diethylene glycol, and the like. Examples of ether solvents include diethyl ether, diisopropyl ether, dibutyl ether, ethylene glycol dimethyl ether, ethylene glycol diethyl ether, propylene glycol dimethyl ether, propylene glycol diethyl ether, diethylene glycol dimethyl ether, tetrahydrofuran, dioxane, anisole, and the like. Examples of halogen-containing organic solvents include dichloromethane, chloroform, carbon tetrachloride, dichloroethane, chlorobenzene, and the like. These solvents can be used individually, or two types or more thereof may be used in combination.

An acidic gas adsorbent including the porous body S2 and the polymer P supported on the surfaces of the pores of the porous body S2 can be produced, for example, by the following method. First, the porous body S2 and the above compound group are mixed to bring the compound group into contact with the surfaces of the pores of the porous body S2.

Mixing of the porous body S2 and the compound group can be performed according to the following method, for example. First, a dispersion liquid including the porous body S2 is prepared. Examples of the solvent for the dispersion liquid include water, alcohols, in particular, lower alcohols, and the like. Preferably, the dispersion liquid includes a lower alcohol, in particular, methanol, as the solvent. Next, the compound group is added to this dispersion liquid. Accordingly, the compound group enters the insides of the pores of the porous body S2, and comes into contact with the surfaces of the pores of the porous body S2. After the compound group is added to the dispersion liquid, the dispersion liquid may be processed in a reduced-pressure atmosphere or a vacuum atmosphere. To the dispersion liquid, another component other than the compound group may be further added. Examples of the other component include the reaction accelerators described above, and the like.

The solid component concentration in the dispersion liquid is not limited in particular, and is, for example, 50 wt% or less, preferably 30 wt% or less, and more preferably 20 wt% or less. The lower the solid component concentration in the dispersion liquid is, the more easily the compound group can be brought into contact with the surfaces of the pores of the porous body S2. The lower limit value of the solid component concentration in the dispersion liquid is not limited in particular, and is 5 wt%, for example.

The method for mixing the porous body S2 and the compound group is not limited to the method described above. For example, the porous body S2 and the compound group may be mixed by preparing a solution including the compound group, and then immersing the porous body S2 in the solution. Examples of the solvent included in the solution include those described above with respect to the dispersion liquid. The solution may further include another component such as a reaction accelerator, in addition to the compound group and the solvent. The solid component concentration in the solution is not limited in particular, and is, for example, 50 wt% or less, preferably 30 wt% or less, and more preferably 20 wt% or less. The lower limit value of the solid component concentration in the solution is not limited in particular, and is 5 wt%, for example.

Next, the compound group is caused to react in a state where the compound group is in contact with the surfaces of the pores of the porous body S2. Accordingly, the polymer P supported on the surfaces of the pores of the porous body S2 can be formed to obtain an acidic gas adsorbent. Reaction of the compound group can be carried out, for example, by heating the above dispersion liquid at a temperature of 40°C to 100°C. Heating of the dispersion liquid may be performed in a reduced-pressure atmosphere or a vacuum atmosphere. As an example, using a rotatory evaporator, heating of the dispersion liquid may be performed in a reduced-pressure atmosphere or a vacuum atmosphere. Through heating of the dispersion liquid, the solvent included in the dispersion liquid may be distilled off while the compound group is caused to react. After the solvent included in the dispersion liquid is distilled off, a drying process may be further performed with respect to the porous body S2. The condition for the drying process of the porous body S2 is not limited in particular. As an example, the drying process of the porous body S2 can be performed by heating the porous body S2 at a temperature of 50°C to 100°C in a reduced-pressure atmosphere or a vacuum atmosphere.

(Adsorption amount of carbon dioxide by acidic gas adsorbent)

The acidic gas adsorbent of the present embodiment has a tendency that the adsorption ability with respect to acidic gas such as carbon dioxide is high. As an example, an adsorption amount a1 of carbon dioxide when the acidic gas adsorbent is caused to be in contact with mixed gas G composed of carbon dioxide, nitrogen, and water vapor for 15 hours is, for example, 0.1 mmol/g or more, preferably 0.3 mmol/g or more, more preferably 0.5 mmol/g or more, and further preferably 0.7 mmol/g or more, and may be 0.8 mmol/g or more, may be 0.9 mmol/g or more, may be 1.0 mmol/g

or more, may be 1.1 mmol/g or more, or may be 1.2 mmol/g or more. The upper limit value of the adsorption amount a1 of carbon dioxide is not limited in particular, and is 10 mmol/g, for example.

[Method for measuring adsorption amount of carbon dioxide]

In the following, a method for measuring the adsorption amount a1 of carbon dioxide will be described. The adsorption amount a1 can be measured by using a measurement device 20 shown in FIG. 2, for example. The measurement device 20 includes a first tank 30 and a second tank 31. As an example, the first tank 30 stores dry-state nitrogen, and the second tank 31 stores mixed gas of dry-state nitrogen and dry-state carbon dioxide. The concentration of carbon dioxide in the mixed gas in the second tank 31 is 5 vol%, for example.

The measurement device 20 further includes a first container 40 containing water 70, and a first path 60 for sending nitrogen from the first tank 30 to the first container 40. The first path 60 has one end connected to a gas outlet of the first tank 30, and the other end disposed in the water 70 in the first container 40. Nitrogen sent from the first tank 30 to the first container 40 is humidified by coming into contact with the water 70. On the first path 60, a massflow controller 35 for adjusting the flow rate of nitrogen that is sent from the first tank 30 to the first container 40 is disposed.

The measurement device 20 further includes a second container 41, a second path 62, and a bypass path 61. The second path 62 connects the first container 40 and the second container 41 to each other. Nitrogen sent to the first container 40 and humidified is sent through the second path 62 to the second container 41. The bypass path 61 is branched from the first path 60 at a position between the first tank 30 and the massflow controller 35 and is connected to the second path 62. A part of the nitrogen sent from the first tank 30 flows into the bypass path 61 and is sent to the second container 41 through the second path 62. On the bypass path 61, a massflow controller 36 for adjusting the flow rate of nitrogen that is sent from the first tank 30 to the bypass path 61 is disposed.

The measurement device 20 further includes a third path 63 for sending the mixed gas from the second tank 31 to the second path 62. The third path 63 has one end connected to a gas outlet of the second tank 31 and the other end connected to the second path 62. On the third path 63, a massflow controller 37 for adjusting the flow rate of the mixed gas that is sent from the second tank 31 to the second path 62 is disposed. The mixed gas sent to the second path 62 is sent through the second path 62 to the second container 41.

The measurement device 20 further includes a third container 42 and a fourth path 64. The third container 42 contains water 71 and an adsorption part 21 disposed in the water 71. In the third container 42, the temperature of the water 71 is maintained at 23°C. The adsorption part 21 has a gas inlet 22 and a gas outlet 23. The adsorption part 21 contains the acidic gas adsorbent therein. The adsorption part 21 is configured such that the water 71 does not permeate therein. Typically, the adsorption part 21 is a tube composed of a hydrophobic resin, e.g., a fluorine resin such as tetrafluoroethylene-perfluoroalkoxyethylene copolymer (PFA). As an example, the tube as the adsorption part 21 has an inner diameter of 4 mm and an outer diameter of 6 mm. The adsorption part 21 is configured to be attachable to/detachable from the measurement device 20.

The measurement device 20 can also be used as an acidic gas adsorption device including the adsorption part 21. The present invention provides, in another aspect thereof, an acidic gas adsorption device 20 including the adsorption part 21 having the gas inlet 22 and the gas outlet 23, wherein the adsorption part 21 contains the acidic gas adsorbent.

The fourth path 64 connects the second container 41 and the third container 42 to each other. Specifically, the fourth path 64 is connected to the gas inlet 22 of the adsorption part 21 in the third container 42. In the fourth path 64, a first concentration meter 50 for measuring the concentration of carbon dioxide in the gas that is supplied to the adsorption part 21 is disposed. As the first concentration meter 50, for example, a $CO_2/H_2O$ gas analyzer, LI-850-3, manufactured by LI-COR, Inc., can be used.

The measurement device 20 further includes a fifth path 65 connected to the gas outlet 23 of the adsorption part 21 and for discharging gas from the adsorption part 21 to the outside of the measurement device 20. On the fifth path 65, a back pressure valve 55 and a second concentration meter 51 are disposed. The back pressure valve 55 allows the pressure in the adsorption part 21 to be adjusted to a constant value. The second concentration meter 51 can measure the concentration of carbon dioxide in the gas that is discharged from the adsorption part 21. As the second concentration meter 51, for example, a $CO_2/H_2O$ gas analyzer, LI-850-3, manufactured by LI-COR, Inc., can be used.

Each path of the measurement device 20 is composed of a metal-made or resin-made pipe, for example.

[Pretreatment]

In the method for measuring the adsorption amount a1, first, a drying process is performed with respect to the acidic gas adsorbent. The drying process is performed by processing the acidic gas adsorbent for two hours or more under a condition of 60°C, in a vacuum atmosphere, for example. Next, in a dry room having a dew point of about -60°C, the adsorption part 21 is filled with the acidic gas adsorbent having been subjected to the drying process. The weight of the acidic gas adsorbent with which the adsorption part 21 is filled is 50 mg, for example. Next, the fourth path

64 and the fifth path 65 are connected to both ends of the adsorption part 21, and the adsorption part 21 is immersed in the water 71 in the third container 42.

Next, nitrogen from the first tank 30 and the mixed gas from the second tank 31 are supplied to the second container 41 through the first path 60, the second path 62, the bypass path 61, and the third path 63 of the measurement device 20. In the second container 41, these gases are mixed, and the mixed gas G composed of carbon dioxide, nitrogen, and water vapor is obtained. In the second container 41, the concentration of carbon dioxide in the mixed gas G is adjusted to 400 vol ppm. The mixed gas G has a temperature of 23°C and a humidity of 80%RH. The mixed gas G is supplied through the fourth path 64 to the adsorption part 21, at a sufficient flow rate with respect to the weight of the acidic gas adsorbent, e.g., at a flow rate of 300 mL/min with respect to 50 mg of the acidic gas adsorbent. In the adsorption part 21, the pressure of the mixed gas G is adjusted by the back pressure valve 55, to 107 kPa.

Next, in a state where the mixed gas G is supplied to the adsorption part 21, the adsorption part 21 is taken out of the third container 42, and the adsorption part 21 is immersed in a hot water bath (not shown) at 80°C for two hours or more. Immersion of the adsorption part 21 in the hot water bath is performed until the concentration of carbon dioxide measured by the first concentration meter 50 and the concentration of carbon dioxide measured by the second concentration meter 51 have substantially the same value. Accordingly, with respect to the acidic gas adsorbent in the adsorption part 21, the pretreatment is completed.

[Adsorption test]

Next, in a state where the mixed gas G is supplied to the adsorption part 21, the adsorption part 21 is taken out of the hot water bath and is immersed in the water 71 in the third container 42. Accordingly, an adsorption test is started with respect to the acidic gas adsorbent in the adsorption part 21. The adsorption test is performed until 15 hours elapses from the start. When the adsorption test is performed for 15 hours, adsorption of carbon dioxide by the acidic gas adsorbent can, normally, be regarded as having reached equilibrium.

In the adsorption test, an amount of substance M1 of carbon dioxide adsorbed by the acidic gas adsorbent until 15 hours from the start is measured. The amount of substance of carbon dioxide adsorbed by the acidic gas adsorbent can be calculated from a result of measuring, over time, the difference between the concentration of carbon dioxide measured by the first concentration meter 50 and the concentration of carbon dioxide measured by the second concentration meter 51. On the basis of the amount of substance M1, the amount of substance of carbon dioxide adsorbed by 1 g of the acidic gas adsorbent in 15 hours is calculated, and the obtained calculated value is identified as the adsorption amount a1.

(Heat resistance of acidic gas adsorbent)

As described above, the amine compound included in the acidic gas adsorbent normally tends to be oxidized by oxygen, etc., in air in a high temperature environment. Oxidation of the amine compound proceeds, for example, by oxidation of the amino group included in the amine compound to an amide group, as shown in formula (I) below. The amide group tends to have poor acidic gas adsorption ability as compared to the amino group. Therefore, in the amine compound, the adsorption performance for acidic gas tends to decrease as the oxidation proceeds.

[Chem. 1]

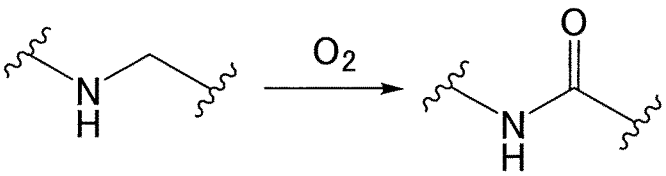


(I)

A conventional acidic gas adsorbent tends to have a high rate of decrease in adsorption performance due to oxidation in a high temperature environment. Therefore, the adsorption performance of the conventional acidic gas adsorbent for acidic gas tends to decrease significantly each time heat treatment for regeneration is performed, for example.

In contrast, the polymer P included in the acidic gas adsorbent of the present embodiment has a sulfide bond in addition to the amino group. In the polymer P, oxidation of the amino group and oxidation of a sulfide group formed by the sulfide bond tend to proceed competitively in a high temperature environment. The sulfide group is oxidized to a sulfinyl group, as shown in formula (II) below, for example. Furthermore, the sulfinyl group may be oxidized to a sulfonyl group. In the polymer P, the oxidation rate of the amino group can be reduced by the oxidation of the sulfide group

proceeding competitively. Accordingly, the rate of decrease in adsorption performance associated with the oxidation of the amino group can be reduced. Thus, in the acidic gas adsorbent of the present embodiment including the polymer P, it can be said that the rate of decrease in adsorption performance due to oxidation in a high temperature environment is reduced, and the heat resistance is improved.

[Chem. 2]

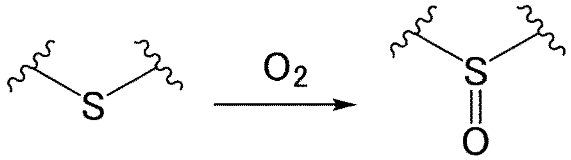


(II)

The heat resistance of the acidic gas adsorbent can be evaluated, for example, by performing heat treatment with respect to the acidic gas adsorbent. As an example, when heat treatment is performed at 85°C for 100 hours with respect to the acidic gas adsorbent of the present embodiment, a maintenance rate R1 of the amount (mmol/g) of carbon dioxide that can be adsorbed is, for example, 35% or more and preferably 40% or more, and may be 50% or more, or may be 60% or more. For the acidic gas adsorbent, it can be said that the higher the maintenance rate R1 is, the more the rate of decrease in adsorption performance due to oxidation in a high temperature environment is reduced. The upper limit value of the maintenance rate R1 is not limited in particular, is, for example, 90%, and may be 80%, or may be 70%.

The maintenance rate R1 can be identified by the following method. First, the acidic gas adsorbent is placed in a glass container in a dry room having a dew point of about -60°C. The acidic gas adsorbent to be placed in the glass container may be, for example, in the form of a block having a weight of about 10 mg and a side of 3 mm or less. The volume of the glass container is 6 mL, for example. Next, the glass container is set in a constant temperature and humidity machine (e.g., PSL-2J, manufactured by ESPEC CORP.), and heat treatment is performed at 85°C for 100 hours in air. The humidity during heat treatment is set to 10% RH, for example. Next, the acidic gas adsorbent after heat treatment is set in a vacuum dryer (e.g., VOS-310C, manufactured by EYELA) in a dry room and treated in a vacuum atmosphere under a condition of 60°C for 2 hours or more. For the acidic gas adsorbent after treatment, an adsorption amount a2 of carbon dioxide when the acidic gas adsorbent is caused to be in contact with the mixed gas G for 15 hours is measured by the same method as the method for measuring the adsorption amount a1. On the basis of the obtained adsorption amount a2 and the adsorption amount a1 of carbon dioxide when the acidic gas adsorbent before heat treatment is caused to be in contact with the mixed gas G for 15 hours, the maintenance rate R1 can be calculated by the following formula.

Maintenance rate R (%) = adsorption amount a2 (mmol/g) + adsorption amount a1 (mmol/g) $\times$ 100

The adsorption amount a2 of carbon dioxide is, for example, 0.1 mmol/g or more, preferably 0.2 mmol/g or more, and more preferably 0.3 mmol/g or more, and may be 0.4 mmol/g or more, or may be 0.5 mmol/g or more. The upper limit value of the adsorption amount a2 of carbon dioxide is not limited in particular, and is 5 mmol/g, for example.

Furthermore, a time (time of heat treatment) H1 until the maintenance rate of the amount (mmol/g) of carbon dioxide that can be adsorbed reaches 50% when heat treatment is performed at 85°C with respect to the acidic gas adsorbent of the present embodiment is, for example, 75 hours or more, preferably 90 hours or more, more preferably 100 hours or more, and further preferably 110 hours or more, and may be 120 hours or more, may be 130 hours or more, or may be 140 hours or more. The upper limit value of the time H1 is not limited in particular, and is 500 hours, for example.

The time H1 can be identified by the following method. First, as shown in FIG. 3, a graph in which a horizontal axis indicates a time H (hr) of heat treatment and a vertical axis indicates a maintenance rate R (%) of the amount of carbon dioxide that can be adsorbed, is prepared. Next, the maintenance rate of the amount of carbon dioxide that can be adsorbed by the acidic gas adsorbent before heat treatment is regarded as 100%, and this data is plotted as a point A1 on the graph. Next, the maintenance rate R1 of the amount of carbon dioxide that can be adsorbed when heat treatment is performed at 85°C for 100 hours with respect to the acidic gas adsorbent by the method described above, is identified, and this data is plotted as a point A2 on the graph. According to a study by the inventors, the maintenance rate R of the amount of carbon dioxide that can be adsorbed by the acidic gas adsorbent tends to decrease in proportion to the time H of heat treatment. Therefore, a linear expression representing a straight line E1 passing through the points A1 and A2 (maintenance rate R = b1 $\times$ time H + 100: b1 is the slope of the straight line E1) can be identified, and the

time H calculated by substituting the maintenance rate R = 50% into this linear expression can be regarded as the above time H1. In FIG. 3, the data when the maintenance rate R is 50% is represented by a point A3.

As an example, when an adsorption process of adsorbing carbon dioxide at room temperature (23°C) and a regeneration process of desorbing carbon dioxide by heat treatment at 85°C are repeated using 1 t of the acidic gas adsorbent, an amount (captured amount) F of carbon dioxide that can be captured by the acidic gas adsorbent until the maintenance rate R of the amount of carbon dioxide that can be adsorbed by the acidic gas adsorbent reaches 20%, is, for example, 1.0 t or more, preferably 3.0 t or more, and more preferably 4.0 t or more, and may be 4.5 t or more, may be 5.0 t or more, or may be 5.5 t or more. The upper limit value of the captured amount F is not limited in particular, and is 10 t, for example.

The captured amount F can be identified by the following method. First, as shown in FIG. 4, a graph in which a horizontal axis indicates the time H (hr) of heat treatment and a vertical axis indicates an amount (adsorption amount) a (mmol/g) of carbon dioxide that can be adsorbed, is prepared. Next, data regarding the amount of carbon dioxide that can be adsorbed by the acidic gas adsorbent before heat treatment (the above adsorption amount a1 (mmol/g)) is plotted as a point B1 on the graph. Next, the amount of carbon dioxide that can be adsorbed by the acidic gas adsorbent after heat treatment is performed at 85°C for 100 hours by the method described above (the above adsorption amount a2 (mmol/g)) is identified, and this data is plotted as a point B2 on the graph. Next, a linear expression representing a straight line E2 passing through the points B1 and B2 (adsorption amount a = b2 × time H + adsorption amount a1: b2 is the slope of the straight line E2) is identified, and a time H2 when the adsorption amount a reaches 20% of the adsorption amount a1 is identified using this linear expression. This data is plotted as a point B3 on the graph. The value calculated by the following formula on the basis of an integral value I of the adsorption amount a in a range from 0 to the time H2 (the area of a portion filled in black in FIG. 4) can be regarded as the captured amount F. The integral value I of the adsorption amount a corresponds to the value calculated by (adsorption amount a at point B1 + adsorption amount a at point B3) × time H2 ÷ 2.

$$\text{Captured amount F (t) = integral value I if adsorption amount a} \times \text{molecular weight of carbon dioxide} \times 10^{-3}$$

The heat resistance of the acidic gas adsorbent can also be evaluated by the following method, for example, by infrared spectroscopy (IR) analysis. First, with respect to the acidic gas adsorbent, heat treatment is performed at 85°C for 100 hours by the method described above. Next, with respect to the acidic gas adsorbent after heat treatment, IR analysis is performed in a dry room having a dew point of about -60°C. IR analysis can be performed, for example, using FT-IR (iS5) manufactured by Thermo Fisher Scientific K. K., by the ATR-Diamond method. Accordingly, an infrared absorption spectrum shown in FIG. 5 is obtained. In FIG. 5, an example of an infrared absorption spectrum of the acidic gas adsorbent after heat treatment is indicated by a solid line. For this infrared absorption spectrum, a peak C1 appearing around 1650 $cm^{-1}$ and derived from the C=O bond of an amide group and a peak C2 appearing around 1450 $cm^{-1}$ and derived from the C-H bond of an alkyl chain are identified. In addition, an absorbance $A_{C1after}$ of the peak C1 and an absorbance $A_{C2after}$ of the peak C2 are identified.

Next, with respect to the acidic gas adsorbent before heat treatment, IR analysis is also performed by the method described above. Accordingly, an infrared absorption spectrum shown in FIG. 5 is obtained. In FIG. 5, an example of an infrared absorption spectrum of the acidic gas adsorbent before heat treatment is indicated by a dashed line. For this infrared absorption spectrum, an absorbance $A_{C1before}$ at the same wavenumber as the above peak C1 and an absorbance $A_{C2before}$ at the same wavenumber as the above peak C2 are identified. The absorbance $A_{C2before}$ is usually almost the same value as the absorbance $A_{C2after}$. The value calculated by the following formula on the basis of the identified absorbances can be utilized as an indicator of the degree of oxidation of the acidic gas adsorbent due to heat treatment.

$$\text{Degree of oxidation} = (\text{absorbance } A_{C1after} \div \text{absorbance } A_{C2after}) - (\text{absorbance } A_{C1before} \div \text{absorbance}_{c2before})$$

The degree of oxidation calculated by the above formula is, for example, 0.5 or less, preferably 0.4 or less, and more preferably 0.3 or less, and may be 0.2 or less, or may be 0.1 or less. For the acidic gas adsorbent, it can be said that the lower the degree of oxidation is, the more the rate of decrease in adsorption performance due to oxidation in a high temperature environment is reduced. The lower limit value of the degree of oxidation is not limited in particular, and is 0.01, for example.

From the viewpoint of reducing the oxidation rate of the amine compound included in a conventional acidic gas adsorbent, it is conceivable to separately add an antioxidant such as a low molecular weight compound having a sulfide bond to the acidic gas adsorbent. However, when such an acidic gas adsorbent is produced or used, the antioxidant may volatilize from the acidic gas adsorbent. The antioxidant may be removed from the acidic gas adsorbent due to a

washing process or the like during the production of the acidic gas adsorbent. Thus, it is difficult to maintain the content of the antioxidant in the acidic gas adsorbent at a sufficient value when the antioxidant is added separately to the acidic gas adsorbent. In contrast, in the acidic gas adsorbent of the present embodiment, the polymer P includes a sulfide bond that contributes to improvement of heat resistance. Since the polymer P is less likely to volatilize and is inhibited from being removed from the acidic gas adsorbent, the content of the sulfide bond in the acidic gas adsorbent can be inhibited from unintentionally decreasing in the present embodiment.

(Usage of acidic gas adsorbent)

The acidic gas adsorbent of the present embodiment can adsorb acidic gas. Examples of the acidic gas include carbon dioxide, hydrogen sulfide, carbonyl sulfide, sulfur oxide (SOx), hydrogen cyanide, and nitrogen oxide (NOx), and preferably, the acidic gas is carbon dioxide.

The acidic gas adsorbent can be used according to the following method, for example. First, mixed gas including acidic gas is brought into contact with the acidic gas adsorbent. The mixed gas includes another gas other than acidic gas, for example. Examples of the other gas include nonpolar gas such as hydrogen or nitrogen, and inert gas such as helium, and preferably, the other gas is nitrogen. Typically, the mixed gas is atmospheric air. The mixed gas may be off-gas from a chemical plant or thermal power generation.

The temperature of the mixed gas is room temperature (23°C), for example. The concentration of acidic gas in the mixed gas is not limited in particular, and in a standard state (0°C, 101 kPa), is, for example, 0.01 vol% (100 vol ppm) or more and preferably 0.04 vol% (400 vol ppm) or more, and may be 1.0 vol% or more. The upper limit value of the concentration of carbon dioxide in the mixed gas is not limited in particular, and in a standard state, is 10 vol%, for example. Typically, the pressure of the mixed gas is equal to that of atmospheric air in the use environment of the acidic gas adsorbent. However, the mixed gas that is brought into contact with the acidic gas adsorbent may be pressurized.

The acidic gas adsorbent having come into contact with the mixed gas adsorbs acidic gas included in the mixed gas. Operation of bringing the mixed gas into contact with the acidic gas adsorbent is performed until acidic gas adsorption by the acidic gas adsorbent reaches equilibrium, for example.

Next, a regeneration process is performed with respect to the acidic gas adsorbent having adsorbed acidic gas. The regeneration process can be performed by heating the acidic gas adsorbent, for example. The heating temperature of the acidic gas adsorbent is 50 to 80°C, for example. The acidic gas adsorbent may be heated in a reduced-pressure atmosphere or a vacuum atmosphere. Through the heating of the acidic gas adsorbent, acidic gas is desorbed from the acidic gas adsorbent. Accordingly, the acidic gas adsorbent is regenerated and the acidic gas adsorbent can be repeatedly used. The acidic gas, in particular, carbon dioxide, desorbed from the acidic gas adsorbent can be utilized as synthesis raw material for chemicals or dry ice. The adsorption operation of acidic gas by means of the acidic gas adsorbent and the regeneration process of the acidic gas adsorbent can be performed by using the measurement device 20 (acidic gas adsorption device) described above.

[Example]

In the following, the present invention will be described in further detail using Examples and Comparative Examples. However, the present invention is not limited thereto.

(Example 1)

First, 2.00 g of 1,4-butanediol diglycidyl ether (manufactured by Tokyo Chemical Industry Co., Ltd.), 0.55 g of pentaerythritol tetrakis(3-mercaptobutyrate) (Karens MT (registered trademark) PE1, manufactured by Showa Denko K.K.), and 1.30 g of triethylenetetramine (manufactured by Sigma-Aldrich Co. LLC.) were added to a 50-mL Laboran screw tube bottle (manufactured by AS ONE Corporation), thereby preparing a mixed solution of an epoxy monomer, a thiol monomer, and an amine monomer. Next, the mixed solution was stirred at 2000 rpm for 5 minutes and then defoamed at 2200 rpm for 2 minutes using a stirrer (THINKY MIXER "Awatori-Rentaro", manufactured by THINKY CORPORATION). Next, the mixed solution was poured into a petri dish made of PFA, and was allowed to stand in a thermostatic bath at 80°C for 4 hours. Accordingly, a polymerization reaction of the monomers proceeded, and the mixed solution was cured. The polymer included in the obtained cured body had an amino group derived from the amine monomer and a sulfide bond derived from the thiol monomer. Next, the obtained cured body was taken out of the petri dish and cut into about 1 cm squares. Next, an operation of immersing the cured body in isopropyl alcohol at 60°C for 1 hour was repeated twice with liquid replacement. Furthermore, an operation of immersing the cured body in ultrapure water at 60°C for 1 hour was repeated twice with liquid replacement. Accordingly, the monomers remaining in the cured body were removed, and an acidic gas adsorbent of Example 1 was obtained.

(Example 2)

An acidic gas adsorbent of Example 2 was obtained by the same method as in Example 1, except that 2.00 g of 1,4-butanediol diglycidyl ether (manufactured by Tokyo Chemical Industry Co., Ltd.), 0.58 g of 1,4-bis(3-mercaptobutyryloxy)butane (Karens MT (registered trademark) BD1, manufactured by Showa Denko K.K.), and 1.30 g of triethylenetetramine (manufactured by Sigma-Aldrich Co. LLC.) were added to a Laboran screw tube bottle to prepare a mixed solution.

(Example 3)

An acidic gas adsorbent of Example 3 was obtained by the same method as in Example 1, except that 2.00 g of 1,4-butanediol diglycidyl ether (manufactured by Tokyo Chemical Industry Co., Ltd.), 0.57 g of pentaerythritol tetrakisthiopropionate (jERCURE (registered trademark) QX40, manufactured by Mitsubishi Chemical Corporation), and 1.29 g of triethylenetetramine (manufactured by Sigma-Aldrich Co. LLC.) were added to a Laboran screw tube bottle to prepare a mixed solution.

(Example 4)

An acidic gas adsorbent of Example 4 was obtained by the same method as in Example 1, except that 2.00 g of 1,4-butanediol diglycidyl ether (manufactured by Tokyo Chemical Industry Co., Ltd.), 0.59 g of trimethylolpropane tris(3-mercaptobutyrate) (Karens MT (registered trademark) TPMB, manufactured by Showa Denko K.K.), and 1.29 g of triethylenetetramine (manufactured by Sigma-Aldrich Co. LLC.) were added to a Laboran screw tube bottle to prepare a mixed solution.

(Example 5)

An acidic gas adsorbent of Example 5 was obtained by the same method as in Example 1, except that 2.00 g of 1,4-butanediol diglycidyl ether (manufactured by Tokyo Chemical Industry Co., Ltd.) and 1.45 g of triethylenetetramine (manufactured by Sigma-Aldrich Co. LLC.) were added to a Laboran screw tube bottle to prepare a mixed solution. The polymer included in the acidic gas adsorbent of Example 5 did not have any sulfide bond.

(Example 6)

An acidic gas adsorbent of Example 6 was obtained by the same method as in Example 1, except that 2.00 g of 1,6-hexanediol diglycidyl ether (Epolight 1600, manufactured by Kyoeisha Chemical Co., Ltd.), 0.32 g of pentaerythritol tetrakis(3-mercaptobutyrate) (Karens MT (registered trademark) PE1, manufactured by Showa Denko K.K.), and 0.90 g of triethylenetetramine (manufactured by Sigma-Aldrich Co. LLC.) were added to a Laboran screw tube bottle to prepare a mixed solution.

(Example 7)

An acidic gas adsorbent of Example 7 was obtained by the same method as in Example 1, except that 2.00 g of 1,6-hexanediol diglycidyl ether (Epolight 1600, manufactured by Kyoeisha Chemical Co., Ltd.), 0.32 g of pentaerythritol tetrakisthiopropionate (jERCURE (registered trademark) QX40, manufactured by Mitsubishi Chemical Corporation), and 0.89 g of triethylenetetramine (manufactured by Sigma-Aldrich Co. LLC.) were added to a Laboran screw tube bottle to prepare a mixed solution.

(Example 8)

An acidic gas adsorbent of Example 8 was obtained by the same method as in Example 1, except that 2.00 g of 1,6-hexanediol diglycidyl ether (Epolight 1600, manufactured by Kyoeisha Chemical Co., Ltd.) and 0.97 g of triethylenetetramine (manufactured by Sigma-Aldrich Co. LLC.) were added to a Laboran screw tube bottle to prepare a mixed solution. The polymer included in the acidic gas adsorbent of Example 8 did not have any sulfide bond.

[Adsorption amount of carbon dioxide]

With respect to the acidic gas adsorbents of Examples 1 to 8, the adsorption amounts a1 and a2 of carbon dioxide before and after heat treatment at 85°C for 100 hours were measured by the method described above. Furthermore, on the basis of the results, the maintenance rate R1 of the amount of carbon dioxide that can be adsorbed after heat treatment, the heating time H1 until the maintenance rate of the amount of carbon dioxide that can be adsorbed reaches 50%, and the amount (captured amount) F of carbon dioxide that can be captured by 1 t of the acidic gas adsorbent until the maintenance rate of the amount of carbon dioxide that can be adsorbed reaches 20%, were identified.

Measurement samples for measuring the adsorption amounts a1 and a2 were prepared by the following method. First, each acidic gas adsorbent was sieved using stainless steel sieves (manufactured by AS ONE Corporation). For sieving, a sieve having openings of 1 mm, a sieve having openings of 250 μm, and a sieve having openings of 90 μm were used in this order. Accordingly, powder of the acidic gas adsorbent having a particle diameter of 90 μm or less was obtained. Next, the powder was immersed in methanol at room temperature for 15 minutes. The powder was air-dried at room temperature for 12 hours and further vacuum-dried at 60°C for 8 hours to prepare a powdered measurement sample.

[IR analysis]

With respect to the acidic gas adsorbents of Examples 1 to 8, IR analysis was performed by the method described above, before and after heat treatment at 85°C for 100 hours, to obtain infrared absorption spectra. On the basis of the results, the degree of oxidation was calculated by the method described above.

Measurement samples for performing IR analysis were prepared by the following method. First, each acidic gas adsorbent was immersed in methanol at room temperature for 15 minutes. The acidic gas adsorbent was air-dried at room temperature for 12 hours and further vacuum-dried at 60°C for 8 hours to prepare a block-shaped measurement sample.

[Glass transition temperature Tg]

With respect to the polymers included in the acidic gas adsorbents of Examples 1 to 8, the glass transition temperature Tg was measured by the following method. First, about 5 mg of each acidic gas adsorbent was set in a simultaneous thermal analysis DSC/TGA device (SDT6500, manufactured by TA Instruments). Using this device, the temperature was increased from 30°C to 200°C at a temperature increase rate of 10°C/min in a nitrogen atmosphere and maintained at that temperature for 1 minute. Next, the acidic gas adsorbent was cooled to -50°C at a temperature decrease rate of 10°C/min and maintained at that temperature for 1 minute, and then the temperature was increased to 200°C at a temperature increase rate of 10°C/min. In a DSC curve at the second temperature increase, a first baseline before specific heat change appeared, a second baseline after specific heat change appeared, and a tangent line passing through a point at which the slope became maximum among bent portions due to the specific heat change, are identified. The intermediate temperature between the intersection of the first baseline and the tangent line and the intersection of the second baseline and the tangent line was identified as the glass transition temperature Tg.

[Content of constitutional unit derived from thiol monomer]

With respect to the polymers included in the acidic gas adsorbents of Examples 1 to 8, the content of the constitutional unit derived from the thiol monomer was identified by the following method. First, about 2 mg of each acidic gas adsorbent was placed in a ceramic boat, and a combustion aid was further added. Next, the acidic gas adsorbent was combusted using an automatic sample combustion device (AQF-2100H, manufactured by Nittoseiko Analytech Co., Ltd.), and the gas generated was collected in 10 mL of an absorption solution. Next, this absorption solution was adjusted to 15 mL by adding ultrapure water to this absorption solution. Using a sample obtained by diluting this absorption solution 100 times, quantitative analysis was performed with an ion chromatograph (IC) apparatus (ICS-5000, manufactured by Thermo Fisher Scientific K.K.). On the basis of the obtained results, the content of the constitutional unit derived from the thiol monomer was identified.

[Table 1]

| | Epoxy monomer | Amine monomer | Thiol monomer | | Tg (°C) | Adsorption amount a1 of $CO_2$ at initial stage (mmol/g) |
|---|---|---|---|---|---|---|
| | | | Type | Content (wt%) (*1) | | |
| Example 1 | BDE | TETA | MTPE1 | 13 | 0.13 | 0.90 |
| Example 2 | | | MTBD1 | 14 | -5.7 | 0.26 |
| Example 3 | | | QX40 | 13 | -2.4 | 1.24 |
| Example 4 | | | MTTPMB | 15 | -5.3 | 1.38 |
| Example 5 | | | - | 0 | -7.9 | 1.82 |
| Example 6 | HDDE | TETA | MTPE1 | 10 | 9.5 | 0.74 |
| Example 7 | | | QX40 | 10 | 11.0 | 0.80 |
| Example 8 | | | - | 0 | 7.0 | 0.95 |

[Table 1] (cont.)

| | Properties related to heat resistance | | | | |
|---|---|---|---|---|---|
| | $CO_2$ adsorption amount a2 (mmol/g) | Maintenance rate R1 (%) (*2) | Time H1 (h) (*3) | Captured amount F (t) (*4) | IR degree of oxidation |
| Example 1 | 0.57 | 63.3 | 136 | 5.1 | 0.21 |
| Example 2 | 0.17 | 65.4 | 142 | 1.6 | 0.32 |
| Example 3 | 0.67 | 54.0 | 110 | 5.7 | 0.03 |
| Example 4 | 0.50 | 36.2 | 79 | 4.6 | 0.19 |
| Example 5 | 0.58 | 31.9 | 73 | 5.6 | 0.51 |
| Example 6 | 0.36 | 48.6 | 97 | 3.1 | 0.14 |
| Example 7 | 0.32 | 40.0 | 83 | 2.8 | 0.09 |
| Example 8 | 0.27 | 28.4 | 70 | 2.8 | 0.33 |

(*1) The content of the constitutional unit derived from the thiol monomer in the polymer
(*2) The value of adsorption amount a2 $\div$ adsorption amount a1 $\times$ 100
(*3) The heating time until the maintenance rate of the amount of carbon dioxide that can be adsorbed reaches 50%
(*4) The amount of carbon dioxide that can be captured by 1 t of the acidic gas adsorbent until the maintenance rate of the amount of carbon dioxide that can be adsorbed reaches 20%

The abbreviations in Table 1 are as follows.

BDE: 1,4-butanediol diglycidyl ether
HDDE: 1,6-hexanediol diglycidyl ether
TETA: triethylenetetramine
MTPE1: pentaerythritol tetrakis(3-mercaptobutyrate) (Karens MT (registered trademark) PE1, manufactured by Showa Denko K.K.)
MTBD1: 1,4-bis(3-mercaptobutyryloxy)butane (Karens MT (registered trademark) BD1, manufactured by Showa Denko K.K.)
QX40: pentaerythritol tetrakisthiopropionate (jERCURE (registered trademark) QX40, manufactured by Mitsubishi Chemical Corporation)
MTTPMB: trimethylolpropane tris(3-mercaptobutyrate) (Karens MT (registered trademark) TPMB, manufactured by Showa Denko K.K.)

As seen from Table 1, the acidic gas adsorbents of Examples 1 to 4 and 6 and 7 including the polymer having

a sulfide bond had higher values for the maintenance rate R1 of the amount of carbon dioxide that can be adsorbed after heat treatment, as compared to Examples 5 and 8. This result indicates that the acidic gas adsorbent of the present embodiment has a reduced rate of decrease in adsorption performance due to oxidation in a high temperature environment, and has improved heat resistance. Furthermore, as seen from Table 1, the captured amount F of carbon dioxide was a large value when thiol monomers having a number of thiol groups of 3 or more, especially 4, were used.

(Example 9)

1,4-Butanediol diglycidyl ether (manufactured by Tokyo Chemical Industry Co., Ltd.) and triethylenetetramine (manufactured by Sigma-Aldrich Co. LLC.) were added to a Laboran screw tube bottle, and 2,2'-thiodiethanol (TDE) was further added as an antioxidant to prepare a mixed solution. The content of TDE in the mixed solution was 2.5 wt%. This mixed solution was processed by the same method as in Example 1 to obtain an acidic gas adsorbent of Example 9 including a polymer of an epoxy monomer and an amine monomer and TDE.

With respect to the acidic gas adsorbent of Example 9, the content of TED was measured using the ion chromatograph (IC) apparatus described above. As a result, the content of TDE in the acidic gas adsorbent was 0.5 wt%, which was greatly reduced from the content in the raw material mixed solution. From this, it is inferred that in Example 9, a large amount of TDE volatilized or was removed during the production of the acidic gas adsorbent.

INDUSTRIAL APPLICABILITY

The acidic gas adsorbent of the present embodiment can adsorb carbon dioxide in atmospheric air, for example.

## Claims

1. An acidic gas adsorbent comprising a polymer having an amino group and at least one selected from the group consisting of a sulfide bond and a polysulfide bond.

2. The acidic gas adsorbent according to claim 1, wherein the amino group includes a secondary amino group.

3. The acidic gas adsorbent according to claim 1, wherein the polymer is an epoxy polymer including a constitutional unit derived from an amine monomer and a constitutional unit derived from a thiol monomer.

4. The acidic gas adsorbent according to claim 3, wherein a number of thiol groups included in the thiol monomer is 3 or more.

5. The acidic gas adsorbent according to claim 3, wherein a number of thiol groups included in the thiol monomer is 4.

6. The acidic gas adsorbent according to claim 3, wherein the thiol monomer includes an ester group.

7. The acidic gas adsorbent according to claim 3, wherein a content of the constitutional unit derived from the thiol monomer in the polymer is 5 wt% to 30 wt%.

8. The acidic gas adsorbent according to claim 3, wherein the amine monomer is an aliphatic amine.

9. The acidic gas adsorbent according to claim 1, wherein, when heat treatment is performed at 85°C for 100 hours, a maintenance rate of an amount (mmol/g) of carbon dioxide that can be adsorbed is 35% or more.

10. The acidic gas adsorbent according to claim 1, wherein a time until a maintenance rate of an amount (mmol/g) of carbon dioxide that can be adsorbed when heat treatment is performed at 85°C reaches 50% is 75 hours or more.

11. The acidic gas adsorbent according to claim 1, wherein an adsorption amount of carbon dioxide when the acidic gas adsorbent is caused to be in contact with mixed gas composed of carbon dioxide, nitrogen, and water vapor for 15 hours is 0.1 mmol/g or more,
where the carbon dioxide in the mixed gas has a concentration of 400 vol ppm and the mixed gas has a temperature of 23°C and a humidity of 80%RH.

12. An acidic gas adsorption device comprising

an adsorption part having a gas inlet and a gas outlet, wherein
the adsorption part contains the acidic gas adsorbent according to any one of claims 1 to 11.

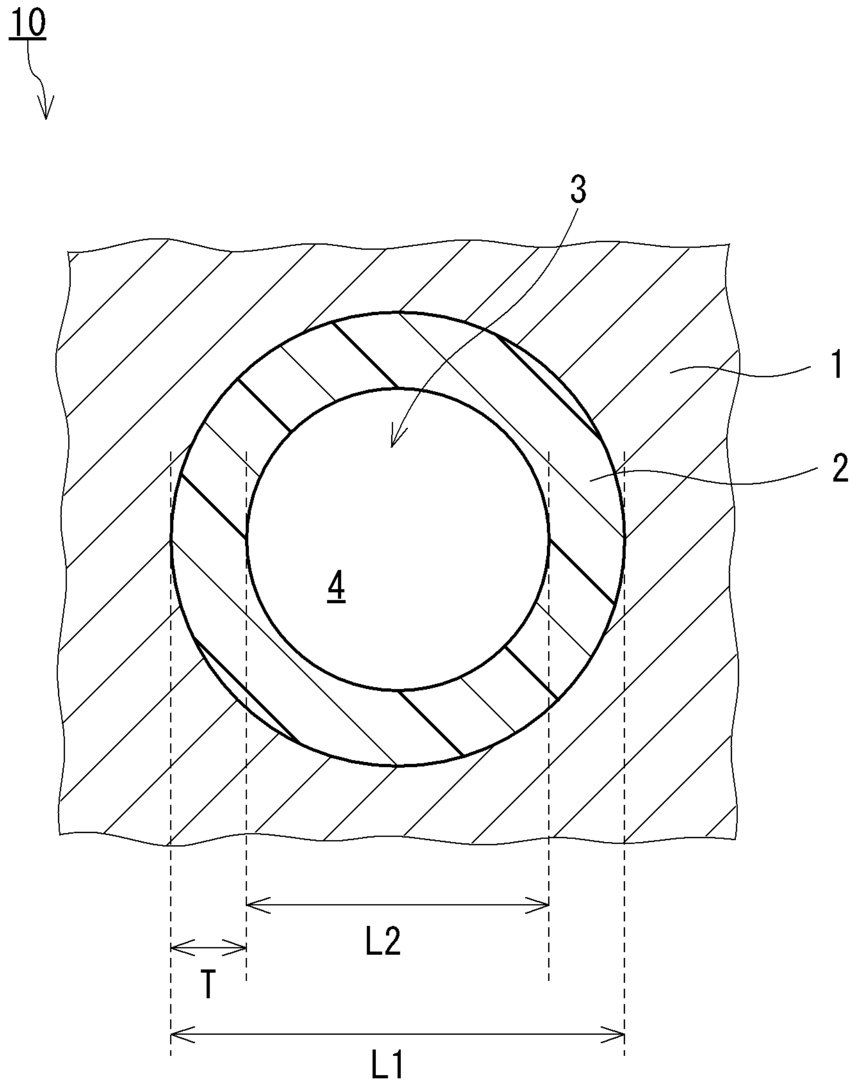


FIG.1

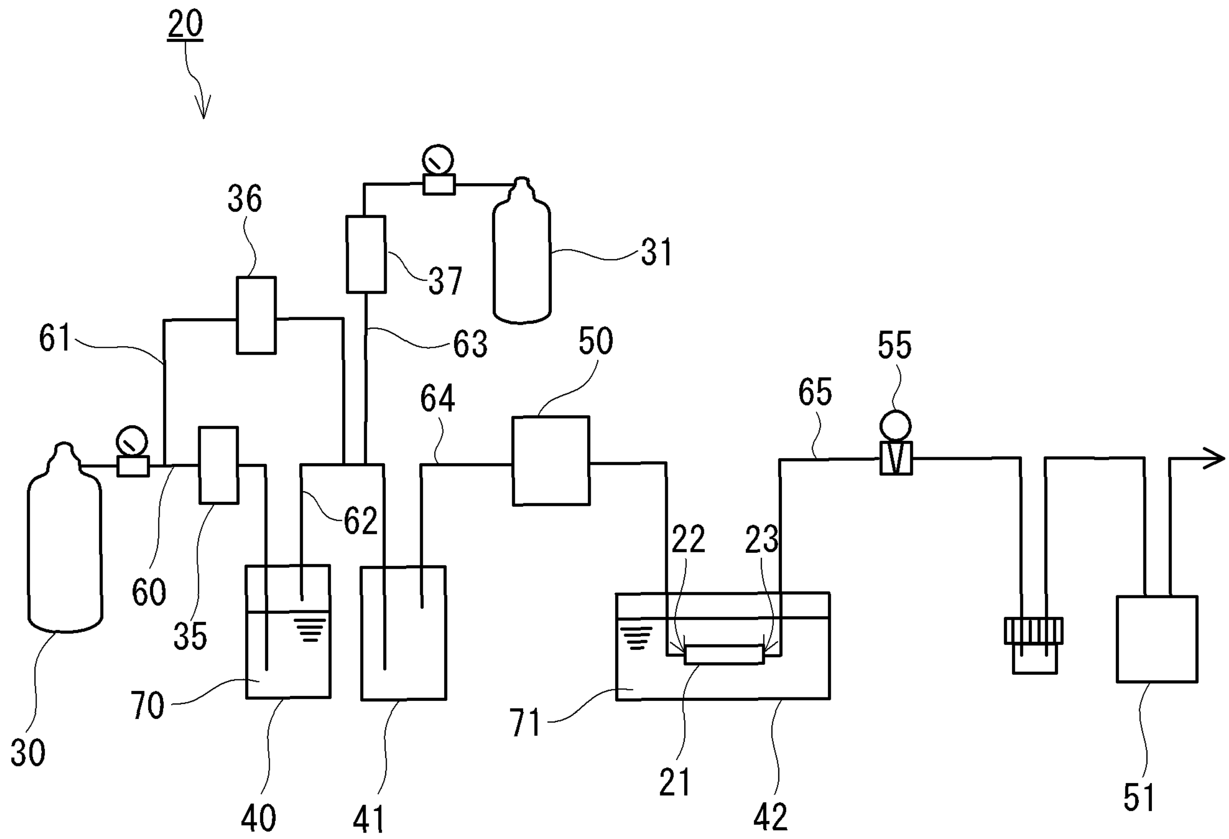
20
36
31
37
61
63
50
55
64
65
62
22
23
60
35
70
30
71
40
41
21
42
51

FIG.2

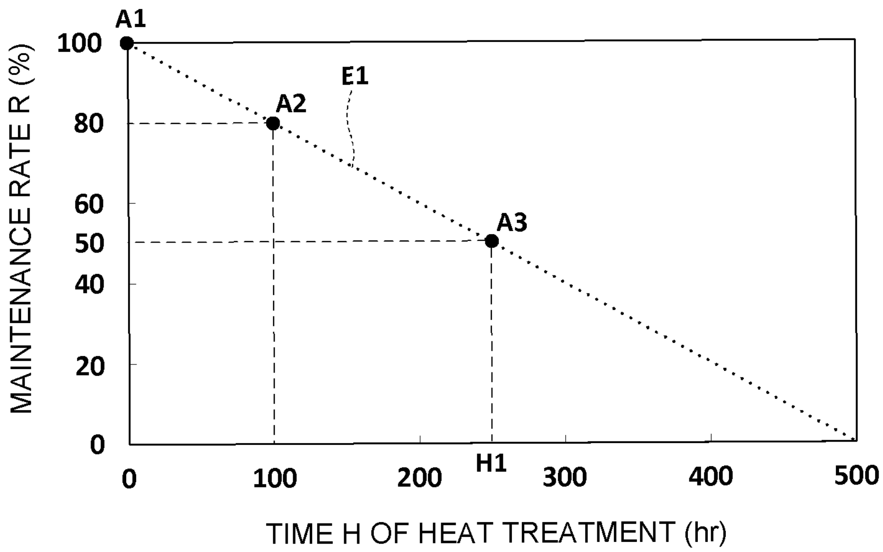
A1
E1
A2
A3
100
80
60
50
40
20
0
MAINTENANCE RATE R (%)
0
100
200
H1
300
400
500
TIME H OF HEAT TREATMENT (hr)

FIG.3

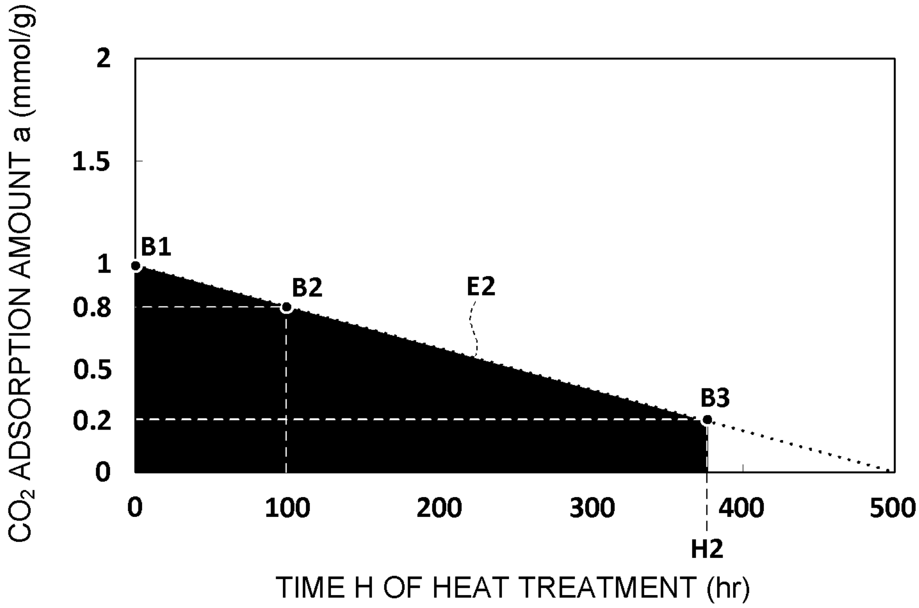
CO2 ADSORPTION AMOUNT a (mmol/g)
2
1.5
1
0.8
0.5
0.2
0
B1
B2
E2
B3
0
100
200
300
400
500
H2
TIME H OF HEAT TREATMENT (hr)

FIG.4

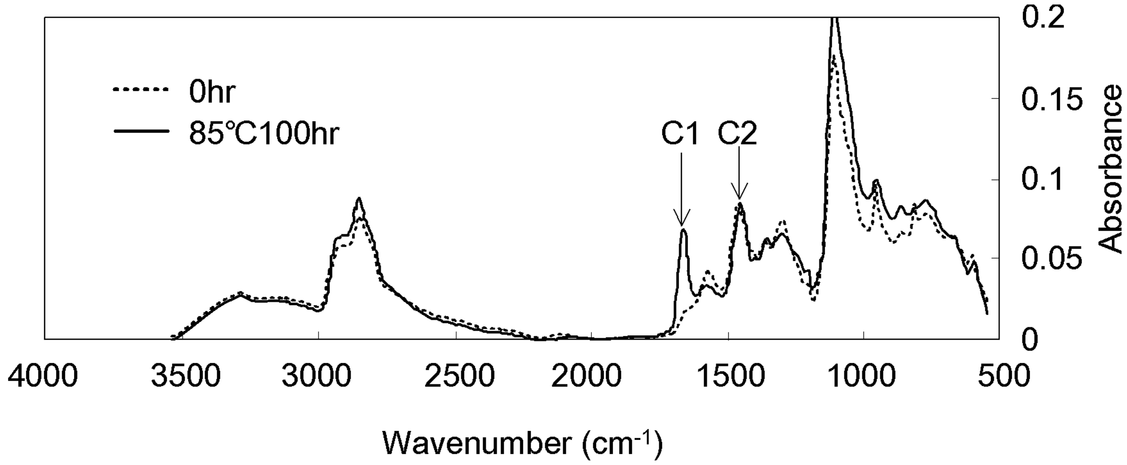
0hr
85℃100hr
C1
C2
0.2
0.15
0.1
0.05
0
Absorbance
4000
3500
3000
2500
2000
1500
1000
500
Wavenumber (cm-1)

FIG.5

**INTERNATIONAL SEARCH REPORT**

International application No. **PCT/JP2022/032130**

**A. CLASSIFICATION OF SUBJECT MATTER**

***B01D 53/14***(2006.01)i; ***B01J 20/26***(2006.01)i; ***B01J 20/28***(2006.01)i
FI: B01J20/26 A; B01J20/28 Z; B01D53/14 100

According to International Patent Classification (IPC) or to both national classification and IPC

**B. FIELDS SEARCHED**

Minimum documentation searched (classification system followed by classification symbols)

B01D53/14; B01J20/26; B01J20/28

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br><br>A | US 2012/0308461 A1 (CENTRAL MICHIGAN UNIVERSITY) 06 December 2012 (2012-12-06)<br>claims 1, 14, 16, 18, 21, paragraphs [0087], [0117], fig. 5 | 1-2, 9-12<br><br><br>3-8 |
| A | JP 2017-47412 A (HITACHI CHEMICAL CO LTD) 09 March 2017 (2017-03-09)<br>entire text | 1-12 |
| A | JP 2013-136051 A (NALCO CO) 11 July 2013 (2013-07-11)<br>entire text | 1-12 |
| A | CN 101695652 A (FUDAN UNIVERSITY) 21 April 2010 (2010-04-21)<br>entire text | 1-12 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 September 2022** | **25 October 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/032130**

| Patent document cited in search report | Publication date (day/month/year) | Patent family member(s) | Publication date (day/month/year) |
|---|---|---|---|
| US 2012/0308461 A1 | 06 December 2012 | WO 2011/103529 A1<br>EP 2539044 A1<br>CN 102802764 A | |
| JP 2017-47412 A | 09 March 2017 | (Family: none) | |
| JP 2013-136051 A | 11 July 2013 | US 2011/0245453 A1<br>EP 2556094 A2<br>CN 102892794 A<br>KR 10-2013-0093474 A | |
| CN 101695652 A | 21 April 2010 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018519146 A